# EUROPÄISCHE PATENTANMELDUNG

(11) **EP 0 686 639 A1**
(43) Veröffentlichungstag der Anmeldung: **13.12.1995**
(21) Anmeldenummer: 95108487.0
(22) Anmeldetag: 02.06.1995
(51) Int. Cl.: C07F 9/6568

(54) **Phosphoniumsalze, ein Verfahren zu ihrer Herstellung und ihre Verwendung**

(30) Priorität: 08.06.1994 DE 4419990
(71) Anmelder: HOECHST AKTIENGESELLSCHAFT, D-65929 Frankfurt am Main (DE)
(72) Erfinder: Naumann, Christoph, Dr., D-65527 Niedernhausen (DE); Regnat, Dieter, Dr., D-65817 Eppstein (DE)

(57) **Zusammenfassung**

Die vorliegende Erfindung betrifft Phosphoniumsalze der allgemeinen Formel (I) 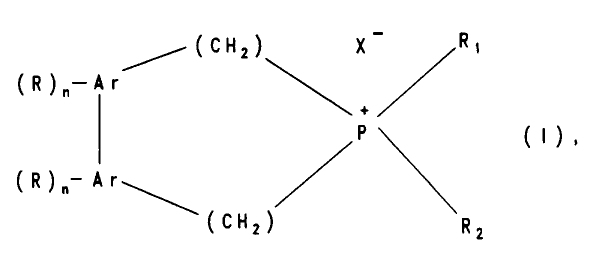
worin Ar-Ar für einen Biphenylrest, einen 1-Phenylnaphthylrest oder einen 1,1'-Binaphthylrest steht, die CH₂-Gruppe jeweils in ortho-Stellung zur Ar-Ar-Bindung angeordnet ist, R für F, einen Alkylrest oder Alkoxyrest mit jeweils 1 bis 8 Kohlenstoffatomen steht, n eine ganze Zahl von 0 bis 4 ist, R¹ und R² gleich oder verschieden sind und unabhängig voneinander für einen Alkylrest mit 1 bis 10 Kohlenstoffatomen, einen cycloaliphatischen Rest mit 5 bis 10 Kohlenstoffatomen, oder für einen Rest Ar¹-(R³)ₘ stehen, wobei Ar¹ ein Phenyl- oder Naphthylrest ist, R³ für F, Cl, CF₃, SO₃H, SO₃Me (Me = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹ und R² zusammen mit dem P-Atom einen Ring mit 4 bis 8 Gliedern bilden, woran gegebenenfalls ein oder zwei aromatische, 6 bis 10 Kohlenstoffatome umfassende Ringe oder Ringsysteme anneliert sind, und X⁻ ein einwertiges Anion oder das Äquivalent eines mehrwertigen Anions einer Mineralsäure, Carbonsäure, Sulfonsäure oder eines Alkohols darstellt. Die Erfindung betrifft ferner ein Verfahren zur Herstellung der Phosphoniumsalze sowie deren Verwendung.

## Beschreibung

Die vorliegende Erfindung betrifft Verbindungen aus der Reihe der Phosphoniumsalze, ein Verfahren zu ihrer Herstellung sowie ihre Verwendung.

Phosphoniumsalze haben eine vielseitige technische Verwendung gefunden. Sie eignen sich beispielsweise als Antistatika (JP 03 81 362; JP 03 74 395; US 4 943 380) Korrosionsschutzmittel, Flammschutzmittel und stellen aufgrund ihrer Formenvielfalt interessante und wichtige Bausteine zur Herstellung weiterer gegebenenfalls Phosphor enthaltender organischer Verbindungen dar.

In Anbetracht der allgemeinen Bedeutung, die Verbindungen aus der Reihe der Phosphoniumsalze zukommt, stellt es eine lohnende Aufgabe dar, neue Verbindungen aus dieser Gruppe von Stoffen bereitzustellen, um das Spektrum ihrer Anwendungsmöglichkeiten nicht nur zu ergänzen, sondern auch durch eine Nuancierung stofflicher Eigenschaften und Variation struktureller Merkmale zu bereichern und zu erweitern.

Diese Aufgabe wird gelöst durch Phosphoniumsalze der allgemeinen Formel (I) 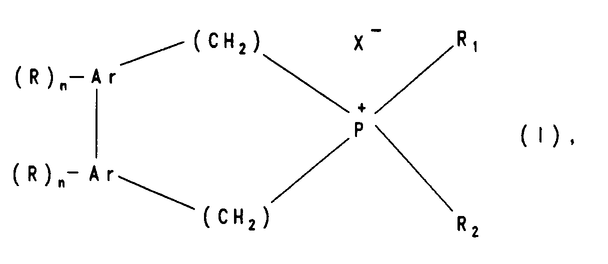
worin Ar-Ar für einen Biphenylrest, einen 1-Phenylnaphthylrest oder einen 1,1'-Binaphthylrest steht, die CH₂-Gruppe jeweils in ortho-Stellung zur Ar-Ar-Bindung angeordnet ist, R für F, einen Alkylrest oder Alkoxyrest mit jeweils 1 bis 8 Kohlenstoffatomen steht, n eine ganze Zahl von 0 bis 4 ist, R¹ und R² gleich oder verschieden sind und unabhängig voneinander für einen Alkylrest mit 1 bis 10 Kohlenstoffatomen, einen cycloaliphatischen Rest mit 5 bis 10 Kohlenstoffatomen, oder für einen Rest Ar¹-(R³)ₘ stehen, wobei Ar¹ ein Phenyl- oder Naphthylrest ist, R³ für F, Cl, CF₃, SO₃H, SO₃Me (Me = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹ und R² zusammen mit dem P-Atom einen Ring mit 4 bis 8 Gliedern bilden, woran gegebenenfalls ein oder zwei aromatische, 6 bis 10 Kohlenstoffatome umfassende Ringe oder Ringsysteme anneliert sind, und X⁻ ein einwertiges Anion oder das Äquivalent eines mehrwertigen Anions einer Mineralsäure, Carbonsäure, Sulfonsäure oder eines Alkohols darstellt.

Die Phosphoniumsalze der allgemeinen Formel (I) stellen aufgrund ihrer Reaktivität, die auf die Einbindung eines P⁺-Ions in ein Ringsystem oder auf die Verknüpfung zweier Ringsysteme mit einem P⁺-Ion als gemeinsames Glied zurückzuführen sein dürfte, und wegen ihrer besonderen Struktur interessante Verbindungen dar. Die besondere Struktur dieser Verbindungen äußert sich darin, daß sehr viele dieser Phosphoniumsalze ein oder mehrere Asymmetriezentren aufweisen. In einer Reihe von Fällen kann das P⁺-Ion als Asymmetriezentrum fungieren. Es sind jedoch in einer Vielzahl von Verbindungen auch Asymmetriezentren vorhanden, die aus der CH₂-Ar(R)ₙ-Ar(R)ₙ-CH₂ Gruppierung resultieren.

Somit eröffnen die neuen Phosphoniumsalze auch den Zugang zu den entsprechenden optisch aktiven Isomeren, beispielsweise zu diastereomeren Phosphoniumsalzen oder zu enantiomeren Phosphoniumsalzen, die ihrerseits unter anderem als Hilfsstoffe bei der Durchführung asymmetrischer Synthesen Anwendung finden können.

Darüberhinaus bieten sich die neuen Phosphoniumsalze aufgrund ihrer Reaktivität und ihrer besonderen Struktur als Bausteine zur Herstellung weiterer Phosphor enthaltender Verbindungen an.

Phosphoniumsalze der Formel (I), worin Ar-Ar für einen Biphenylrest, einen 1-Phenylnaphthylrest oder einen 1,1'-Binaphthylrest und R für einen Alkylrest oder Alkoxyrest mit jeweils 1 bis 4 Kohlenstoffatomen steht, spielen eine besondere Rolle, da sie vergleichsweise leicht zugänglich sind.

Dies trifft auch auf Phosphoniumsalze der Formel (I) zu, worin n für 0 oder 1, insbesondere n für 0 steht.

Von Interesse sind auch Phosphoniumsalze der Formel (I), in denen R¹ und R² gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R³)ₘ stehen, wobei Ar¹ ein Phenylrest ist, R³ für F, CF₃ oder einen Alkylrest mit 1 bis 4 Kohlenstoffatomen und m für 0 oder 1 steht, oder R¹ und R² zusammen mit dem P-Atom einen Ring bilden und für CH₂-Ar(R)ₙ-Ar(R)ₙ-CH₂ stehen.

Wie zuvor bereits erwähnt, ist X⁻ ein einwertiges Anion oder das Äquivalent eines mehrwertigen Anions einer Mineralsäure, Carbonsäure, Sulfonsäure oder eines Alkohols.

Ohne Anspruch auf Vollständigkeit zu erheben, seien als einwertiges Anion F⁻, Cl⁻, Br⁻, J⁻, NO₃⁻, HSO₄⁻, HCO₃⁻, BF₄⁻, PF₆⁻, H₂PO₄⁻, ClO₄⁻, R⁴COO⁻, worin R⁴ für H, einen Alkylrest mit 1 bis 7 Kohlenstoffatomen oder einen Arylrest mit 6 bis 10 Kohlenstoffatomen steht, R⁵SO₃⁻, worin R⁵ einen F-, CF₃-, CH₃-, Phenyl- oder Tolyl-Rest darstellt, oder für R⁶O⁻, worin R⁶ einen Rest mit 1 bis 10 Kohlenstoffatomen darstellt, genannt oder als Äquivalent eines mehrwertigen Anions für 1/2 SO₄²⁻, 1/2 HPO₄²⁻, 1/2 CO₃²⁻ oder 1/2 Anion einer Dicarbonsäure mit 2 bis 6 Kohlenstoffatomen genannt.

Falls die Phosphoniumsalze der Formel (I) ein Asymmetriezentrum besitzen und somit die Bedingungen für das Vorliegen optischer Isomerer erfüllen, liegen sie in der (R,S)-Form, in der (R)-Form oder in der (S)-Form vor. Im Zusammenhang mit der Durchführung asymmetrischer Synthesen sind Phosphoniumsalze in der (R)-Form und der (S)-Form von Interesse.

Sie lassen sich mit guter Aussicht auf Erfolg sowohl in der (R)-Form oder (S)-Form als optisch aktive Bausteine verwenden, um weitere gegebenenfalls optisch aktive und gegebenenfalls Phosphor enthaltende Verbindungen in der (R)-Form oder (S)-Form zu synthetisieren.

Von besonderem Interesse sind Phosphoniumsalze der allgemeinen Formel (I), in denen Ar-Ar für 1,1'-Binaphthyl und n für 0 oder 1, insbesondere 0 steht. Diese Verbindungen sind nicht nur in der (R,S)-Form leicht zugänglich, sondern lassen sich auch in der (R)-Form ebenso wie in der (S)-Form mit vertretbarem Aufwand herstellen.

Ohne Anspruch auf Vollständigkeit zu erheben, seien als typische Vertreter von Phosphoniumsalzen der Formel (I) folgende Verbindungen genannt: (R,S)-4,4-Diphenyl-4,5-dihydro-3H-dinaphtho[2,1-c:1',2'-e]phosphepinium bromid
(R)-4,4-Diphenyl-4,5-dihydro-3H-dinaphtho[2,1-c:1',2'-e]phosphepiniumbromid (S)-4,4-Diphenyl-4,5-dihydro-3H-dinaphtho[2,1-c:1',2'-e]phosphepinium bromid (R,S)-4,4-Dicyclohexyl-4,5-dihydro-3H-dinaphtho[2,1-c:1',2'-e]phosphepinium bromid
(R)-4,4-Dicyclohexyl-4,5-dihydro-3H-dinaphtho[2,1-c:1',2'-e]phosphepinium bromid
(S)-4,4-Dicyclohexyl-4,5-dihydro-3H-dinaphtho[2,1-c:1',2'-e]phosphepinium bromid
(R,S)-4,4-Diisopropyl-4,5-dihydro-3H-dinaphtho[2,1-c:1',2'-e]phosphepinium bromid
(R)-4,4-Diisopropyl-4,5-dihydro-3H-dinaphtho[2,1-c:1',2'-e]phosphepinium bromid
(S)-4,4-Diisopropyl-4,5-dihydro-3H-dinaphtho[2,1-c:1',2'-e]phosphepinium bromid
(R,S)-4,4-Di-sec-butyl-4,5-dihydro-3H-dinaphtho[2,1-c:1',2'-e]phosphepinium bromid
(R,S)-4,4-Di-n-butyl-4,5-dihydro-3H-dinaphtho[2,1-c:1',2'-e]phosphepinium bromid
6,6-Diphenyl-6,7-dihydro-5H-dibenzo[c,e]phosphepinium bromid Bis-[(R,S)-4,5-dihydro-3H-dinaphtho[2,1-c:1',2'-e]phosphepinium bromid 4-Methyl-4-phenyl-4,5-dihydro-3H-dinaphtho[2,1-c:1',2'-e]phosphepinium bromid
1,2-Bis-{4-phenyl-4,5-dihydro-3H-dinaphtho[2,1-c:1',2'-e]phosphepinium-4-yl}ethan dibromid
6,6-Diisopropyl-6,7-dihydro-5H-dibenzo[c,e]phosphepiniumbromid
6,6-Di-sec-butyl-6,7-dihydro-5H-dibenzo[c,e]phosphepiniumbromid
6,6-Di-n-butyl-6,7-dihydro-5H-dibenzo[c,e]phosphepiniumbromid
6-Methy-6-phenyl-6,7-dihydro-5H-dibenzo[c,e]phosphepiniumbromid
6,6-Bis-(4-sulfophenyl)-6,7-dihydro-5H-dibenzo[c,e]phosphepiniumbromid.

Die vorliegende Erfindung betrifft ferner ein Verfahren zur Herstellung von Phosphoniumsalzen der allgemeinen Formel (I)

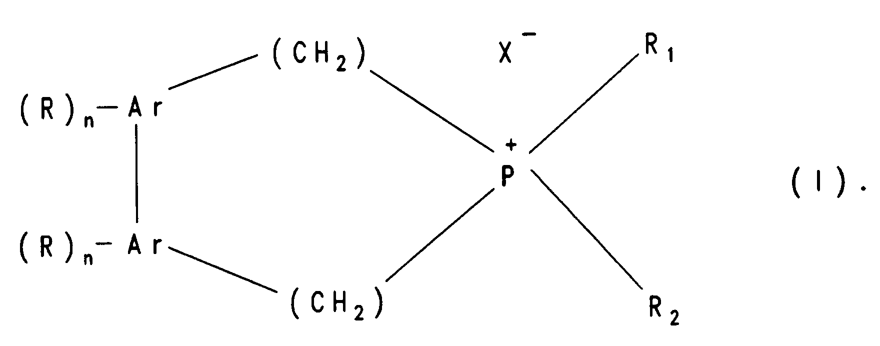

Es ist dadurch gekennzeichnet, daß man eine Verbindung der allgemeinen Formel (II) 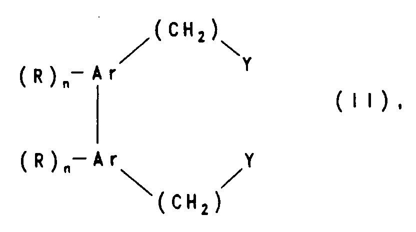
worin Ar-Ar für einen Biphenylrest, einen 1-Phenylnaphthylrest oder einen 1,1'-Binaphthylrest steht, die CH₂-Gruppe jeweils in ortho-Stellung zur Ar-Ar-Bindung angeordnet ist, R für F, einen Alkylrest oder Alkoxyrest mit jeweils 1 bis 8 Kohlenstoffatomen steht, n eine ganze Zahl von 0 bis 4 ist, und Y für Cl, Br, J, oder einen Sulfonatrest R⁵SO₃, worin R⁵ ein F-, CF₃-, CH₃-, Phenyl- oder Tolyl-Rest ist, steht, mit einer Verbindung der allgemeinen Formel (III) 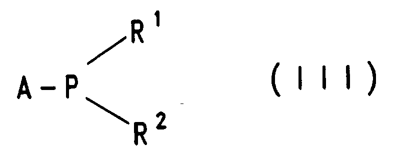
worin R¹ und R² gleich oder verschieden sind und unabhängig voneinander für einen Alkylrest mit 1 bis 10 Kohlenstoffatomen, einen cycloaliphatischen Rest mit 5 bis 10 Kohlenstoffatomen, oder für einen Rest Ar¹-(R³)ₘ stehen, wobei Ar¹ ein Phenylrest oder Naphthylrest ist, R³ für F, Cl, CF₃, SO₃H, SO₃Me (Me = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹ und R² zusammen mit dem P-Atom einen Ring mit 4 bis 8 Gliedern bilden, woran gegebenenfalls ein oder zwei aromatische, 6 bis 10 Kohlenstoffatome umfassende Ringe oder Ringsysteme anneliert sind, A für H oder Si(R⁷)₃, wobei R⁷ gleich oder verschieden ist und jeweils für einen Alkylrest mit 1 bis 4 Kohlenstoffatomen steht, gegebenenfalls in Anwesenheit eines Lösungsmittels bei 0 bis 200°C umsetzt und gegebenenfalls das Anion Y⁻ gegen ein Anion X⁻, wobei X⁻ ein einwertiges Anion oder das Äquivalent eines mehrwertigen Anions einer Mineralsäure, Carbonsäure, Sulfonsäure oder eines Alkohols darstellt, austauscht.

Die Umsetzung verläuft nach folgender Gleichung 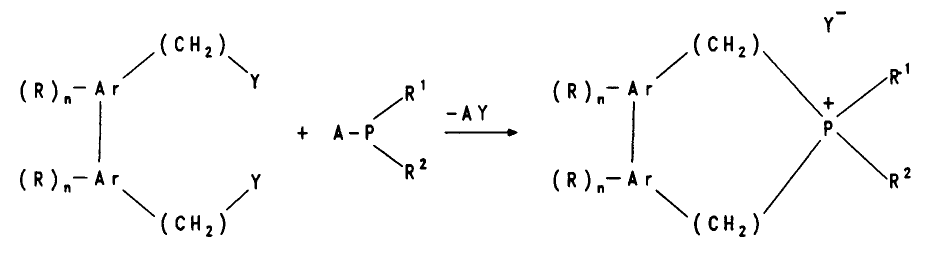
wobei, falls Y⁻ nicht gleich X⁻ ist, Y⁻ anschließend gegen X⁻ ausgetauscht wird.

Ein Vorteil des erfindungsgemäßen Verfahrens besteht darin, daß man vergleichsweise leicht zugängliche Ausgangsstoffe verwenden kann. Dies trifft sowohl auf die Verbindungen der Formel (II) als auch auf die Verbindungen der Formel (III) zu. Ein weiterer Vorteil ist, daß sich die Umsetzung ohne großen apparativen Aufwand realisieren läßt. Darüber hinaus verläuft die Reaktion mit hoher Selektivität und liefert die gewünschten Endprodukte (Verbindungen der Formel (I)) in hoher Ausbeute. Die Reinheit der dabei anfallenden Endprodukte ist üblicherweise so gut, daß man bereits durch einfaches Auskristallisieren aus der unmittelbar anfallenden Reaktionsmischung ein sehr reines Endprodukt erhalten kann. Auf eine zusätzliche Reinigung, die einen weiteren technischen Aufwand erfordert und in der Regel eine Verringerung der Ausbeute zur Folge hat, kann in diesem Falle verzichtet werden.

Für das Verfahren spielen Verbindungen der Formel (II), worin Ar-Ar für einen Biphenylrest, einen 1-Phenylnaphthylrest oder einen 1,1'-Binaphthylrest und R für einen Alkylrest oder Alkoxyrest mit jeweils 1 bis 4 Kohlenstoffatomen steht, eine besondere Rolle, da sie vergleichsweise leicht zugänglich sind und in recht großer Auswahl zur Verfügung gestellt werden können.

Dies trifft auch auf Verbindungen der Formel (II), worin n für 0 oder 1, insbesondere n für 0, steht, zu.

Ein weiterer Vorteil des erfindungsgemäßen Verfahren ist darin zu sehen, daß sich in einer Reihe von Fällen optisch aktive Phosphoniumsalze der Formel (I) sowohl in der (R)-Form als auch in der (S)-Form herstellen lassen.

Es ist allgemein bekannt, daß es sehr schwierig ist, ein racemisches Gemisch in enantiomerenreine oder auch nur weitgehend enantiomerenreine Verbindungen aufzutrennen. Derartige Racematspaltungen sind im allgemeinen mit einem sehr hohen Aufwand verbunden und führen darüberhinaus meist nicht zum Erfolg.

Durch Umsetzung der Verbindung der Formel (II) in der (R)-Form oder in der (S)-Form mit der Verbindung der Formel (III) eröffnet das erfindungsgemäße Verfahren überraschenderweise einen sehr einfachen Weg zur direkten Herstellung von Phosphoniumsalzen der Formel (I) in der (R)-Form und der (S)-Form. Da sich die (R)- und die (S)-Form der Phosphoniumsalze auf diese Weise gezielt synthetisieren läßt, kann auf eine aufwendige Racematspaltung, deren Erfolgsaussichten obendrein sehr ungewiß sind, verzichtet werden. Die enantiomerenreinen oder weitgehend enantiomerenreinen Phosphoniumsalze lassen sich durch einfaches Kristallieren direkt aus dem Reaktionsgemisch gewinnen und durch Filtration isolieren.

Je nach Bedarf setzt man eine Verbindung der Formel (II) in der (R,S)-Form, in der (R)-Form oder in der (S)-Form ein und erhält das entsprechende Phosphoniumsalz in der (R,S)-Form, in der (R)-Form oder in der (S)-Form.

Von besonderem Interesse sind Verbindungen der Formel (II), worin Ar-Ar für 1,1'-Binaphthyl steht, in der (R,S)-Form, in der (R)-Form und in der (S)-Form. Insbesondere ist es interessant, diese Verbindungen in der (R)-Form oder (S)-Form einzusetzen, um die entsprechenden Phosphoniumsalze herzustellen.

Man setzt die Verbindung der Formel (II) mit einer Verbindung der Formel (III) um, insbesondere mit einer Verbindung der Formel (III), worin R¹ und R² gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R³)ₘ stehen, wobei Ar¹ ein Phenylrest ist, R³ für F, CF₃ oder einen Alkylrest mit 1 bis 4 Kohlenstoffatomen und m für 0 oder 1 steht oder R¹ und R² zusammen mit dem P-Atom einen Ring bilden und für CH₂-Ar(R)ₙ-Ar(R)ₙ-CH₂ stehen.

Der Rest A besitzt die eingangs bereits erwähnte Bedeutung und steht insbesondere für H.

Man kann die Umsetzung in Anwesenheit oder Abwesenheit eines Lösungsmittels durchführen. In einer Reihe von Fällen hat es sich als nützlich erwiesen, die Umsetzung in Gegenwart eines Lösungsmittels durchzuführen. Üblicherweise setzt man als Lösungsmittel ein polar aprotisches Lösungsmittel oder ein unpolares Lösungsmittel oder ein Gemisch dieser Lösungsmittel ein.

Als polar aprotisches Lösungsmittel eignet sich beispielsweise Tetrahydrofuran oder Dioxan und als unpolares Lösungsmittel lassen sich beispielsweise Chlorbenzol, Dichlorbenzol, Toluol, o-Xylol, m-Xylol, p-Xylol, technische Gemische isomerer Xylole, Ethylbenzol oder Mesitylen oder Gemische dieser Lösungsmittel einsetzen.

Man kann sowohl die Verbindung der Formel (II) als auch die Verbindung der Formel (III) in dem Lösungsmittel oder Lösungsmittelgemisch lösen und anschließend umsetzen.

Üblicherweise versetzt man die Verbindung der Formel (II) mit dem Lösungsmittel oder Lösungsmittelgemisch und setzt die Verbindung der Formel (III) zu.

Es genügt in der Regel, die Verbindung der Formel (II) und die Verbindung der Formel (III) in einem Molverhältnis von (1 bis 2):1, insbesondere (1 bis 1,2):1 umzusetzen.

In vielen Fällen hat es sich als ausreichend erwiesen, die Reaktion bei einer Temperatur von 20 bis 160, insbesondere 50 bis 150°C durchzuführen.

Besonders einfach gestaltet sich die Umsetzung, wenn man bis zum Siedepunkt des jeweils verwendeten Lösungsmittels erhitzt und die Umsetzung bei dieser Temperatur ablaufen läßt.

Nach Beendigung der Umsetzung wird das Reaktionsgemisch abgekühlt, wobei üblicherweise das Phosphoniumsalz auskristallisiert. Anschließend läßt sich das Phosphoniumsalz durch Filtration, Waschen und Trocknen als sehr reines Produkt isolieren.

Falls gewünscht, kann man das Anion Y⁻ gegen ein Anion X⁻ austauschen, indem man eine entsprechende Umsalzung vornimmt. Dies kann man beispielsweise durch Zugabe einer das Anion X⁻ enthaltenden Salzlösung zu einer Lösung des Phosphoniumsalzes, das das Anion Y⁻ enthält, erreichen.

Das erfindungsgemäße Verfahren läßt sich sowohl diskontinuierlich als auch kontinuierlich ausführen. Es kann unter reduziertem Druck, unter Normaldruck (Atmosphärendruck) oder erhöhtem Druck ausgeübt werden.

Die Phosphoniumsalze der Formel (I) eignen sich zur Verwendung als Antistatikum.

Die nachfolgenden Beispiele belegen die Erfindung, ohne sie zu beschränken.

Experimenteller Teil:

### Beispiel 1

### (R,S)-4,4-Diphenyl-4,5-dihydro-3H-dinaphtho[2,1-c:1',2'-e]phosphepinium bromid [(R,S)-2,2'-Bis-(diphenylphosphoniumbromid)-1,1'-binaphthyl]

Unter Luft- und Feuchtigkeitsausschluß werden 51,9 g (118 mMol) (R,S)-2,2'-Bis-(brommethyl)-1,1'-binaphthyl in 400 ml absolutem Toluol bei Raumtemperatur gelöst. Zu dieser Lösung tropft man 22 g (118,2 mMol) Diphenylphosphin und erhitzt die resultierende Reaktionslösung 8 Stunden zum Sieden. Nach dem Abkühlen wird der ausgefallene farblose Feststoff abfiltriert und zweimal mit jeweils 100 ml Toluol und 100 ml niedrigsiedendem Petrolether gewaschen. Der farblose Feststoff wird sodann im Hochvakuum 4 Stunden getrocknet.
Ausbeute: 56,2 g (87,3 %)
Schmp.: > 300°C
¹H-NMR-Spektrum
(DMSO-d₆) 4,05 (dd, J_{PH} = ²J_{H,H} = 15,5 Hz, 2H, -CH₂-); 4,95 (dd, J_{PH} = 11,4 Hz, ²J_{H,H} = 15,5 Hz, 2H, -CH₂-); 4,97 (d, J_{PH}= 15,1 Hz, 1H, -CH₂-); 7,07 (mc, 2H, Aromaten-H); 7,35 (mc, 2H, Aromaten-H); 7,53 (mc, 4H, Aromaten-H); 7,69 (mc, 4H, Aromaten-H), 7,82 (mc, 2H, Aromaten-H); 7,94 (mc, 4H, Aromaten-H); 8,05 (mc, 4H, Aromaten-H) ppm.
¹³C-NMR-Spektrum
(DMSO-d₆) 25,9 (d, J = 50,7 Hz, 4C, -CH₂-); 118,5 (d, J = 76,7 Hz, 2C, C_{q}, Phenyl); 125,5 (d, J = 9,7 Hz, 2C, C_{q}, Naphthyl); 126,2-129,5 (12C, CH, Naphthyl); 129,8 (d, J = 12,1 Hz, 2C, CH, Naphthyl); 131,6 (2C, C_{q}, Naphthyl); 132,6 (d, J = 9,8 Hz, 2C, CH, Phenyl); 133,0 (2C, C_{q}, Naphthyl); 134,1 (2C, C_{q}, Naphthyl); 134,7 (d, J = 2,9 Hz, 2C, CH, Phenyl) ppm.
³¹P-NMR-Spektrum
(DMSO-d₆) 42,5 ppm
FAB-Massenspektrum
M-Br]⁺ = 465

### Beispiel 2

### (R,S)-4,4-Diisopropyl-4,5-dihydro-3H-dinaphtho[2,1-c:1',2'-e]phosphepinium bromid [(R,S)-2,2'-Bis-(diisopropylphosphoniumbromid)-1,1'-binaphthyl]

Unter Luft- und Feuchtigkeitsausschluß werden 18,05 g (41,0 mMol) (R,S)-2,2'-Bis-(brommethyl)-1,1'-binaphthyl in 80 ml absolutem Toluol bei Raumtemperatur gelöst. Zu dieser Lösung tropft man 5 g (42,3 mMol) Diisopropylphosphin und erhitzt die resultierende Reaktionslösung 8 Stunden zum Sieden. Nach dem Abkühlen wird der ausgefallene farblose Feststoff abfiltriert und zweimal mit jeweils 50 ml Toluol und 50 ml niedrigsiedendem Petrolether gewaschen. Der farblose Feststoff wird sodann im Hochvakuum 4 Stunden getrocknet.
Ausbeute: 14,4 g (73,8 % d.Th.)
Schmp.: > 300°C
¹H-NMR-Spektrum
(DMSO-d₆) 1,28 (mc, 12H, CH₃); 2,58 (mc, 2H, Methin-H); 3,42 (dd, J_{PH} = ²J_{H,H} = 15,5 Hz, 2H, -CH₂-); 4,15 (dd, J_{PH} = 9,46 Hz, ²J_{H,H} = 15,5Hz, 2H, - CH₂-); 6,92 (mc, 2H, Aromaten-H); 7,29 (mc, 2H, Aromaten-H); 7,53 (mc, 2H, Aromaten-H); 7,83 (mc, 2H, Aromaten-H); 8,08 (mc, 2H, Aromaten-H); 8,17 (mc, 2H, Aromaten-H) ppm.
¹³C-NMR-Spektrum
(DMSO-d₆) 16,12 (mc, CH₃); 15,12 (d, J = 38,2 Hz, 2C, CH); 21,64 (d, J = 44,3 Hz, 2C, -CH₂-); 126,14 (mc, 4C, CH, Aromaten); 126,71 (mc, 2C, CH, Aromaten); 127,06 (mc, 2C, C_{q}, Aromaten-H); 127,90 (mc, 2C, CH, Aromaten); 128,41 (mc, 2C, CH, Aromaten); 129,39 (mc, 2C, CH, Aromaten); 131,79 (mc, 2C, C_{q}, Aromaten); 132,85 (mc, 2C, C_{q}, Aromaten); 133,43 (mc, 2C, CH, Aromaten) ppm.
³¹P-NMR-Spektrum
(DMSO-d₆) 66,67 ppm
FAB-Massenspektrum
M-Br]⁺ = 397

### Beispiel 3

### (R,S)-4,4-Di-sec-butyl-4,5-dihydro-3H-dinaphtho[2,1-c:1',2'-e]phosphepinium bromid [(R,S)-2,2'-Bis-(diisobutylphosphoniumbromid)-1,1'-binaphthyl]

Unter Luft- und Feuchtigkeitsausschluß werden 25,4 g (58 mMol) (R,S)-2,2'-Bis-(brommethyl)-1,1'-binaphthyl in 80 ml absolutem Xylol bei Raumtemperatur gelöst. Zu dieser Lösung tropft man 8,74 g (59,8 mMol) Diisobutylphosphin und erhitzt die resultierende Reaktionslösung 8 Stunden zum Sieden. Nach dem Abkühlen wird der ausgefallene farblose Niederschlag abfiltriert und zweimal mit jeweils 80 ml Xylol und anschließend 80 ml niedrigsiedendem Petrolether gewaschen. Der farblose Feststoff wird sodann im Hochvakuum 4 Stunden getrocknet.
Ausbeute: 22,2 g (75,8 % d.Th.)
Schmp.: > 300°C
¹H-NMR-Spektrum
(DMSO-d₆) 0,95 (mc, 6H, CH₃); 1,23 (mc, 3H, CH₃); 1,33 (mc, 3H, CH₃); 1,42 (mc, 2H, -CH₂-); 1,76 (mc, 1H, CH); 2,05 (mc, 1H, CH); 2,3 (mc, 2H, -CH₂-); 3,42 (mc, 2H, -CH₂-); 4,18 (mc, 2H, -CH₂-); 6,93 (mc, 2H, Aromaten); 7,30 (mc, 2H, Aromaten); 7,53 (mc, 2H, Aromaten); 7,79 (mc, 2H, Aromaten); 8,07 (mc, 2H, aromaten); 8,15 (mc, 2H, Aromaten) ppm.
³¹P-NMR-Spektrum
(DMSO-d₆) 65,92 ppm
FAB-Massenspektrum
M-Br]⁺ = 425

### Beispiel 4

### 6,6-Diphenyl-6,7-dihydro-5H-dibenzo[c,e]phosphepinium bromid [(R,S)-2,2'-Bis-(diphenylphosphoniumbromid)biphenyl]

Unter Luft- und Feuchtigkeitsausschluß werden 8,16 g (24 mMol) (R,S)-2,2'-Bis-(brommethyl)biphenyl in 80 ml absolutem Toluol bei Raumtemperatur gelöst. Zu dieser Lösung tropft man 4,47 g (24,0 mMol) Diphenylphosphin und erhitzt die resultierende Reaktionslösung 8 Stunden zum Sieden. Nach dem Abkühlen wird der ausgefallene farblose Feststoff abfiltriert und zweimal mit jeweils 50 ml Toluol und 50 ml niedrigsiedendem Petrolether gewaschen. Der farblose Feststoff wird sodann im Hochvakuum 4 Stunden getrocknet.
Ausbeute: 7,7 g (72,1 %)
Schmp.: > 300°C
³¹P-NMR-Spektrum
(DMSO-d₆) 41,26 ppm
FAB-Massenspektrum
M-Br]⁺ = 365

### Beispiel 5

### (R,S)-4,4-Diphenyl-4,5-dihydro-3H-dinaphtho[2,1-c:1',2'-e]phosphepinium bromid [(R,S)-2,2'-Bis-(diphenylphosphoniumbromid)-1,1'-binaphthyl]

Unter Luft- und Feuchtigkeitsausschluß werden 24,8 g (56,7 mMol) (R,S)-2,2'-Bis-(brommethyl)-1,1'-binaphthyl in 300 ml absolutem Toluol bei Raumtemperatur gelöst. Zu dieser Lösung tropft man 15,4 g (59,6 mMol) Trimethylsilyl-diphenylphosphin und erhitzt die resultierende Reaktionslösung 8 Stunden zum Sieden. Nach dem Abkühlen wird der ausgefallene farblose Feststoff abfiltriert und zweimal mit jeweils 50 ml Toluol und 50 ml niedrigsiedendem Petrolether gewaschen. Der farblose Feststoff wird sodann im Hochvakuum 4 Stunden getrocknet.
Ausbeute: 19,5 g (63,1 %)
Schmp.: > 300°C
³¹P-NMR-Spektrum
(DMSO-d₆) 42,3 ppm

### Beispiel 6:

### (R,S)-4,4-Dicyclohexyl-4,5-dihydro-3H-dinaphtho[2,1-c:1',2'-e]phosphepinium bromid [(R,S)-2,2'-Bis-(dicyclohexylphosphoniumbromid)-1,1'-binaphthyl]

Unter Luft- und Feuchtigkeitsausschluß werden 11,01 g (25 mMol) (R,S)-2,2'-Bis-(brommethyl)-1,1'-binaphthyl in 120 ml entgastem Chlorbenzol gelöst und auf 100°C erhitzt. Zu dieser Lösung tropft man 7,44 g (37.5 mMol) Dicyclohexylphosphin und rührt noch 5 Stunden bei 100°C. Nach dem Abkühlen filtriert man den farblosen Feststoff ab, wäscht zweimal mit 50 ml Chlorbenzol und einmal mit 50 ml niedrigsiedendem Petrolether. Anschließend trocknet man den farblosen Feststoff 4 Stunden im Hochvakuum. Man erhält 10,44 g (75%) farblose Kristalle mit Schmp. > 300°C.
³¹P-NMR-Spektrum
(DMSO-d₆): δ = 59,7 ppm

### Beispiel 7

### (S)-4,4-Diphenyl-4,5-dihydro-3H-dinaphtho[2,1-c:1',2'-e]phosphepiniumbromid [(S)-2,2'-Bis-(diphenylphosphoniumbromid)-1,1'-binaphthyl]

Unter Luft- und Feuchtigkeitsausschluß werden 51,9 g (118 mMol) (S)-2,2'-Bis-(brommethyl)-1,1'-binaphthyl in 400 ml absolutem Toluol bei Raumtemperatur gelöst. Zu dieser Lösung tropft man 22 g (118,2 mMol) Diphenylphosphin und erhitzt die resultierende Reaktionslösung 8 Stunden zum Sieden. Nach dem Abkühlen wird der ausgefallene farblose Feststoff abfiltriert und zweimal mit jeweils 100 ml Toluol und 100 ml niedrigsiedendem Petrolether gewaschen. Der farblose Feststoff wird sodann im Hochvakuum 4 Stunden getrocknet.
Ausbeute: 56,2 g (87,3 %)
Schmp.: > 300°C
[α]²⁰_{D} = - 192,5° (gemessen in N,N-Dimethylformamid)

### Beispiel 8

### (S)-4,4-Diisopropyl-4,5-dihydro-3H-dinaphtho[2,1-c:1',2'-e]phosphepiniumbromid [(S)-2,2'-Bis-(diisopropylphosphoniumbromid)-1,1'-binaphthyl]

Unter Luft- und Feuchtigkeitsausschluß werden 18,05 g (41,0 mMol) (S)-2,2'-Bis-(brommethyl)-1,1'-binaphthyl in 80 ml absolutem Toluol bei Raumtemperatur gelöst. Zu dieser Lösung tropft man 5 g (42,3 mMol) Diisopropylphosphin und erhitzt die resultierende Reaktionslösung 8 Stunden zum Sieden. Nach dem Abkühlen wird der ausgefallene farblose Feststoff abfiltriert und zweimal mit jeweils 50 ml Toluol und 50 ml niedrigsiedendem Petrolether gewaschen. Der farblose Feststoff wird sodann in Hochvakuum 4 Stunden getrocknet.
Ausbeute: 14,4 g (73,8 % d.Th.)
Schmp.: > 300°C
[α]²⁰_{D} = + 139,2° (gemessen in N,N-Dimethylformamid)

### Beispiel 9

### (S)-4,4-Dicyclohexyl-4,5-dihydro-3H-dinaphtho[2,1-c:1', 2'-e]phosphepiniumbromid [(S)-2,2'-Bis(dicyclohexylphosphoniumbromid)-1,1'-binaphthyl

Unter Luft- und Feuchtigkeitsausschluß werden 11,01 g (25 mMol) (S)-2,2'-Bis-(brommethyl)-1,1'-binaphthyl in 120 ml entgastem Chlorbenzol gelöst und auf 100°C erhitzt. Zu dieser Lösung tropft man 7,44 g (37,4 mMol) Dicyclohexylphosphin und rührt noch 5 Stunden bei 100°C. Nach dem Abkühlen filtriert man den farblosen Feststoff ab, wäscht zweimal mit 50 ml Chlorbenzol und einmal mit 50 ml niedrigsiedendem Petrolether. Anschließend trocknet man den farblosen Feststoff 4 Stunden im Hochvakuum.
Man erhält 10,44 g (75 %) farblose Kristalle mit Schmp. > 300°C.
[α]²⁰_{D} = + 69,2° (gemessen in N,N-Dimethylformamid)

## Patentansprüche

1. Phosphoniumsalze der allgemeinen Formel (I) 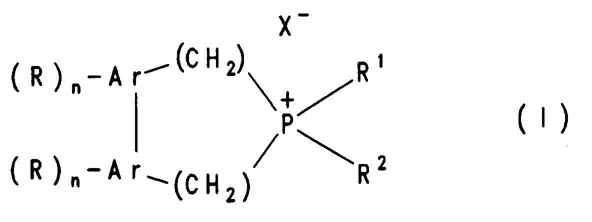 worin Ar-Ar für einen Biphenylrest, einen 1-Phenylnaphthylrest oder einen 1,1'-Binaphthylrest steht, die CH₂-Gruppe jeweils in ortho-Stellung zur Ar-Ar-Bindung angeordnet ist, R für F, einen Alkylrest oder Alkoxyrest mit jeweils 1 bis 8 Kohlenstoffatomen steht, n eine ganze Zahl von 0 bis 4 ist, R¹ und R² gleich oder verschieden sind und unabhängig voneinander für einen Alkylrest mit 1 bis 10 Kohlenstoffatomen, einen cycloaliphatischen Rest mit 5 bis 10 Kohlenstoffatomen, oder für einen Rest Ar¹-(R³)ₘ stehen, wobei Ar¹ ein Phenyl- oder Naphthylrest R³ für F, Cl, CF₃, SO₃H, SO₃Me (Me = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹ und R² zusammen mit dem P-Atom einen Ring mit 4 bis 8 Gliedern bilden, woran gegebenenfalls ein oder zwei aromatische, 6 bis 10 Kohlenstoffatome umfassende Ringe oder Ringsysteme anneliert sind, und X⁻ ein einwertiges Anion oder das Äquivalent eines mehrwertigen Anions einer Mineralsäure, Carbonsäure, Sulfonsäure oder eines Alkohols darstellt.

2. Phosphoniumsalze nach Anspruch 1, dadurch gekennzeichnet, daß Ar-Ar für einen Biphenylrest, einen 1-Phenylnaphthylrest oder einen 1,1'-Binaphthylrest und R für einen Alkylrest oder Alkoxyrest mit jeweils 1 bis 4 Kohlenstoffatomen steht.

3. Phosphoniumsalze nach Anspruch 1 oder 2, dadurch gekennzeichnet, daß n für 0 oder 1 steht.

4. Phosphoniumsalze nach einem oder mehreren der Ansprüche 1 bis 3, dadurch gekennzeichnet, daß n für 0 steht.

5. Phosphoniumsalze nach einem oder mehreren der Ansprüche 1 bis 4, dadurch gekennzeichnet, daß R¹ und R² gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R³)ₘ stehen, wobei Ar¹ ein Phenylrest ist, R³ für F, CF₃ oder einen Alkylrest mit 1 bis 4 Kohlenstoffatomen und m für 0 oder 1 steht, oder R¹ und R² zusammen mit dem P-Atom einen Ring bilden und für CH₂-Ar(R)ₙ-Ar(R)ₙ-CH₂ stehen.

6. Phosphoniumsalze nach einem oder mehreren der Ansprüche 1 bis 5, dadurch gekennzeichnet, daß X⁻ als einwertiges Anion für F⁻, Cl⁻, Br⁻, J⁻, NO₃⁻, HSO₄⁻, HCO₃⁻, BF₄⁻, PF₆⁻, H₂PO₄⁻, ClO₄⁻, R⁴COO⁻, worin R⁴ für H, einen Alkylrest mit 1 bis 7 Kohlenstoffatomen oder einen Arylrest mit 6 bis 10 Kohlenstoffatomen steht, für R⁵SO₃⁻, worin R⁵ einen F-, CF₃-, CH₃-, Phenyl- oder Tolyl-Rest darstellt, oder für R⁶O⁻, worin R⁶ einen Rest mit 1 bis 10 Kohlenstoffatomen darstellt, steht oder als Äquivalent eines mehrwertigen Anions für 1/2 SO₄²⁻, 1/2 HPO₄²⁻, 1/2 CO₃²⁻ oder 1/2 Anion einer Dicarbonsäure mit 2 bis 6 Kohlenstoffatomen steht.

7. Phosphoniumsalze nach einem oder mehreren der Ansprüche 1 bis 6, dadurch gekennzeichnet, daß die Phosphoniumsalze in der (R,S)-Form, in der (R)-Form oder in der (S)-Form vorliegen.

8. Phosphoniumsalze nach einem oder mehreren der Ansprüche 1 bis 7, dadurch gekennzeichnet, daß Ar-Ar für 1,1'-Binaphthyl steht und das Phosphoniumsalz in der (R,S)-Form, in der (R)-Form oder in der (S)-Form vorliegt.

9. Verfahren zur Herstellung von Phosphoniumsalzen der allgemeinen Formel (I) 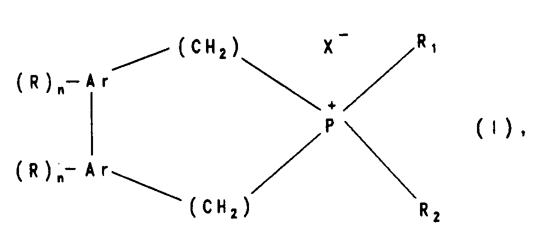 dadurch gekennzeichnet, daß man eine Verbindung der allgemeinen Formel (II) 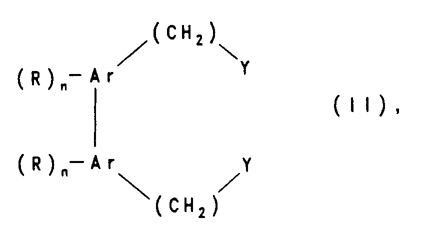 worin Ar-Ar für einen Biphenylrest, einen 1-Phenylnaphthylrest oder einen 1,1'-Binaphthylrest steht, die CH₂-Gruppe jeweils in ortho-Stellung zur Ar-Ar-Bindung angeordnet ist, R für F, einen Alkylrest oder Alkoxyrest mit jeweils 1 bis 8 Kohlenstoffatomen steht, n eine ganze Zahl von 0 bis 4 ist, und Y für Cl, Br, J, oder einen Sulfonatrest R⁵SO₃, worin R⁵ ein F-, CF₃-, CH₃-, Phenyl- oder Tolyl-Rest ist, steht, mit einer Verbindung der allgemeinen Formel (III) 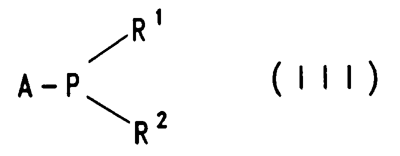 worin R¹ und R² gleich oder verschieden sind und unabhängig voneinander für einen Alkylrest mit 1 bis 10 Kohlenstoffatomen, einen cycloaliphatischen Rest mit 5 bis 10 Kohlenstoffatomen, oder für einen Rest Ar¹-(R³)ₘ stehen, wobei Ar¹ ein Phenylrest oder Naphthylrest ist, R³ für F, Cl, CF₃, SO₃H, SO₃Me (Me = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹ und R² zusammen mit dem P-Atom einen Ring mit 4 bis 7 Gliedern bilden, woran gegebenenfalls ein oder zwei aromatische, 6 bis 10 Kohlenstoffatome umfassende Ringe oder Ringsysteme anneliert sind, A für H oder Si(R⁷)₃, wobei R⁷ gleich oder verschieden ist und jeweils für einen Alkylrest mit 1 bis 4 Kohlenstoffatomen steht, gegebenenfalls in Anwesenheit eines Lösungsmittels bei 0 bis 200°C umsetzt und gegebenenfalls das Anion Y⁻ gegen ein Anion X⁻, wobei X⁻ ein einwertiges Anion oder das Äquivalent eines mehrwertigen Anions einer Mineralsäure, Carbonsäure, Sulfonsäure oder eines Alkohols darstellt, austauscht.

10. Verfahren nach Anspruch 9, dadurch gekennzeichnet, daß man eine Verbindung der Formel (II), worin Ar-Ar für einen Biphenylrest, einen 1-Phenylnaphthylrest oder einen 1,1'-Binaphthylrest und R für einen Alkylrest oder Alkoxyrest mit jeweils 1 bis 4 Kohlenstoffatomen steht, einsetzt.

11. Verfahren nach Anspruch 9 oder 10, dadurch gekennzeichnet, daß man eine Verbindung der Formel (II), worin n für 0 oder 1 steht, einsetzt.

12. Verfahren nach einem oder mehreren der Ansprüche 9 bis 11, dadurch gekennzeichnet, daß man eine Verbindung der Formel (II), worin n für 0 steht, einsetzt.

13. Verfahren nach einem oder mehreren der Ansprüche 9 bis 12, dadurch gekennzeichnet, daß man eine Verbindung der Formel (II) in der (R,S)-Form, in der (R)-Form oder in der (S)-Form einsetzt.

14. Verfahren nach einem oder mehreren der Ansprüche 9 bis 13, dadurch gekennzeichnet, daß man eine Verbindung der Formel (II), worin Ar-Ar für 1,1'-Binaphthyl steht, in der (R,S)-Form, in der (R)-Form oder in der (S)-Form einsetzt.

15. Verfahren nach einem oder mehreren der Ansprüche 9 bis 14, dadurch gekennzeichnet, daß man eine Verbindung der Formel (III), worin R¹ und R² gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R³)ₘ stehen, wobei Ar¹ ein Phenylrest ist, R³ für F, CF₃ oder einen Alkylrest mit 1 bis 4 Kohlenstoffatomen und m für 0 oder 1 steht oder R¹ und R² zusammen mit dem P-Atom einen Ring bilden und für CH₂-Ar(R)ₙ-Ar(R)ₙ-CH₂ stehen, einsetzt.

16. Verfahren nach einem oder mehreren der Ansprüche 9 bis 15, dadurch gekennzeichnet, daß man eine Verbindung der Formel (III), worin A für H steht, einsetzt.

17. Verfahren nach einem oder mehreren der Ansprüche 9 bis 16, dadurch gekennzeichnet, daß man als Lösungsmittel ein polar aprotisches Lösungsmittel oder ein unpolares Lösungsmittel oder ein Gemisch dieser Lösungsmittel einsetzt.

18. Verfahren nach einem oder mehreren der Ansprüche 9 bis 17, dadurch gekennzeichnet, daß man als polar aprotisches Lösungsmittel Tetrahydrofuran oder Dioxan und als unpolares Lösungsmittel Chlorbenzol, Dichlorbenzol, Toluol, o-Xylol, m-Xylol, p-Xylol, technische Gemische isomerer Xylole, Ethylbenzol oder Mesitylen oder Gemische dieser Lösungsmittel einsetzt.

19. Verfahren nach einem oder mehreren der Ansprüche 8 bis 16, dadurch gekennzeichnet, daß man die Verbindung der Formel (II) mit der Verbindung der Formel (III) bei 20 bis 160°C umsetzt.

20. Verwendung der Phosphoniumsalze der Formel (I) als Antistatikum.
